(19) **Europäisches Patentamt / European Patent Office / Office européen des brevets**

(11) **EP 1 596 663 B1**

(12) **FASCICULE DE BREVET EUROPEEN**

(45) Date de publication et mention
de la délivrance du brevet:
**16.05.2007 Bulletin 2007/20**

(21) Numéro de dépôt: **04707548.6**

(22) Date de dépôt: **03.02.2004**

(51) Int Cl.:
**A23C 9/13** (2006.01)

(86) Numéro de dépôt international:
**PCT/FR2004/000243**

(87) Numéro de publication internationale:
**WO 2004/068958 (19.08.2004 Gazette 2004/34)**

(54) **YOGHOURT DE STRUCTURE BIMODALE ET PROCEDE DE PREPARATION**

JOGHURT MIT ZWEIPHASEN-STRUKTUR UND HERSTELLUNGSVERFAHREN DAFÜR

YOGURT WITH A TWO-PHASE STRUCTURE AND METHOD FOR PRODUCTION THEREOF

(84) Etats contractants désignés:
**AT BE BG CH CY CZ DE DK EE ES FI FR GB GR
HU IE IT LI LU MC NL PT RO SE SI SK TR**

(30) Priorité: **03.02.2003 FR 0301188**

(43) Date de publication de la demande:
**23.11.2005 Bulletin 2005/47**

(73) Titulaire: **COMPAGNIE GERVAIS DANONE
75009 Paris (FR)**

(72) Inventeurs:
• **CREPEL, Pascal
F-91190 Gif Sur Yvette (FR)**
• **KAMINSKA, Grazyna
62700 Turek (PL)**
• **RAMAGE, Olivier
F-91360 Villemoisson Sur Orge (FR)**

(74) Mandataire: **Warcoin, Jacques et al
Cabinet Régimbeau
20, rue de Chazelles
75847 Paris cedex 17 (FR)**

(56) Documents cités:
| | |
|---|---|
| **EP-A- 0 049 927** | **EP-A- 0 351 128** |
| **WO-A-00/19831** | **WO-A-01/32037** |
| **WO-A-89/02702** | **WO-A-98/42202** |
| **GB-A- 1 476 309** | **US-A- 4 163 802** |

• **DATABASE WPI Section Ch, Week 199954
Derwent Publications Ltd., London, GB; Class
D13, AN 1999-626889 XP002257193 & JP 11
276067 A (SNOW BRAND MILK PROD CO LTD) 12
octobre 1999 (1999-10-12)**

**Description**

La présente invention concerne un yoghourt de structure bimodale dans lequel on peut incorporer une préparation aromatisée, telle qu'une préparation de chocolat. L'invention concerne aussi un procédé de fabrication d'un tel yoghourt.

Des spécialités laitières aromatisées avec des arômes dits « chauds » sont généralement très appréciées des consommateurs. Comme exemples d'arômes chaud, on peut notamment citer le chocolat, le cacao, le caramel, la vanille, le café, le praliné, le nougat, le miel, des arômes de fruits oléagineux, tels que notamment la noix, la noisette, l'amande, la pistache, et des arômes d'épices tels que notamment la cannelle, le coriandre, le curry. Par exemple, les produits Danette, commercialisés par le groupe Danone, sont des spécialités laitières aux arômes chauds très appréciées par les consommateurs. Ces spécialités sont des produits laitiers non fermentés, qui présentent des valeurs de pH généralement comprises entre 6 et 7.

Des essais de commercialisation de yoghourts auxdits arômes chauds, tels que des yoghourts au chocolat, n'ont jamais été fructueux. En effet, un yoghourt au chocolat testé auprès d'un panel de consommateurs se voit attribuer une note de satisfaction globale faible. Cette absence de satisfaction des consommateurs peut notamment s'expliquer par l'incompatibilité organoleptique entre les produits laitiers fermentés, tels que les yoghourts, et les arômes chauds, notamment les arômes de chocolat. En effet, lors du procédé de fabrication d'un produit laitier fermenté, notamment d'un yoghourt, l'étape de fermentation entraîne la production, au sein de la masse laitière, d'acide lactique. La présence d'acide lactique dans la masse laitière diminue les valeurs de pH de cette dernière. Dans le cas notamment d'un yoghourt, le pH est alors abaissé à des valeurs comprises entre 4 et 5. Or, en milieu acide, le chocolat et le cacao présentent un goût amer et des faux goûts, tels que des notes aromatiques fermentées. Ainsi, l'utilisation d'arômes chauds pour aromatiser des produits laitiers fermentés, comme des yoghourts ou des fromages frais, présentant des valeurs de pH comprises entre 4 et 5, est limitée du fait de la présence d'un arrière goût et d'une acidité forte, qui dénaturent la saveur véritable des arômes utilisés.

La demande WO 0019831 décrit un yoghourt brassé au chocolat contenant de la crème.

Dans des procédés de fabrication de fromages frais, il est connu d'incorporer de la matière grasse, notamment de la crème, dans une pâte maigre ayant déjà subi au moins une étape de fermentation. Ce procédé d'incorporation de la crème dans la masse fermentée permet d'enrichir celle-ci en matière grasse jusqu'à une valeur désirée, sur un plan nutritionnel et sensoriel.

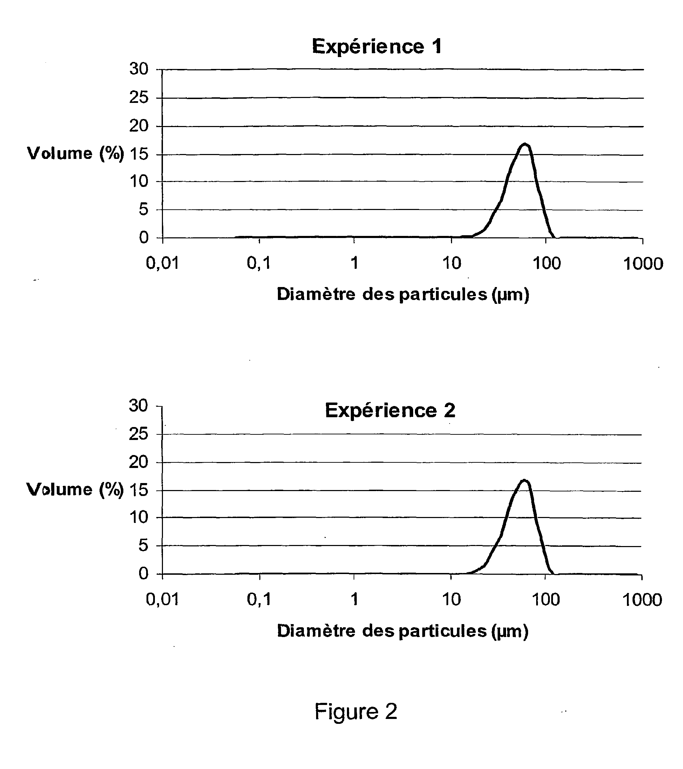

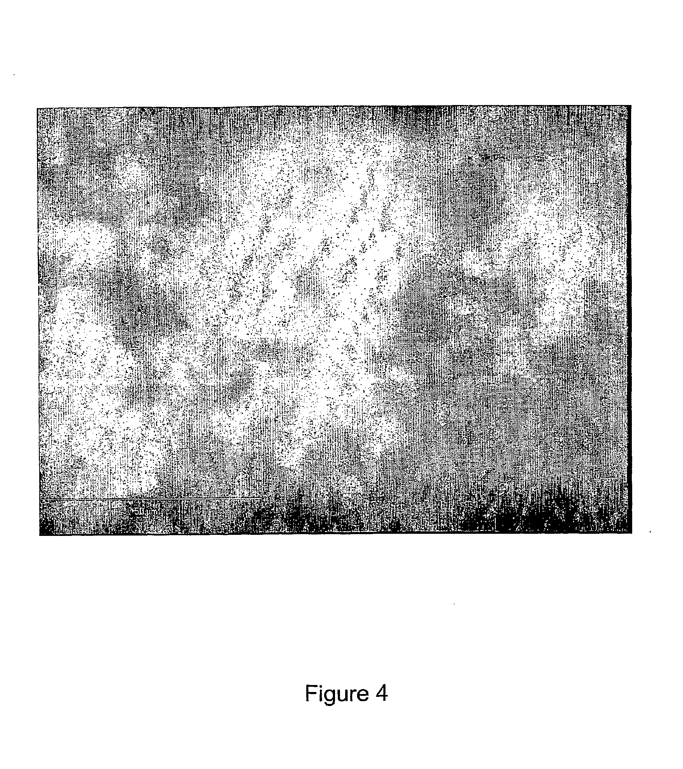

En revanche, un procédé, caractérisé par l'incorporation d'une crème sucrée ou non-sucrée, homogénéisée ou non-homogénéisée, dans une masse fermentée n'est pas utilisé dans des procédés de fabrication d'un yoghourt pour des raisons de complexité du procédé et/ou pour des raisons économiques ou traditionnelles de fabrication d'un yoghourt. Dans des procédés classiques de fabrication d'un yoghourt, un mix unique est élaboré en mélangeant tous les ingrédients laitiers du futur yoghourt et, éventuellement, des ingrédients tels que du sucre. Ce mix unique est ensuite homogénéisé, pasteurisé, ensemencé avec des ferments lactiques thermophiles spécifiques, Streptococcus thermophilus et Lactobacillus delbruekii bulgaricus, et fermenté. Après refroidissement, la masse blanche obtenue est conditionnée directement, seule ou après mélange avec une préparation de fruit ou aromatique. Dans un tel procédé de fabrication d'un yoghourt, l'étape de fermentation, au cours de laquelle tout le réseau protéique, constitué par l'agrégation des protéines présentes dans la masse laitière, va se former, s'effectue en présence de globules gras de taille faible et homogène. Ces derniers participent donc intégralement et intimement à la construction d'un réseau mixte Matière Protéique - Matière Grasse, soit un réseau mixte dense avec l'imbrication importante des globules gras dans le réseau protéique. On observe ainsi un yoghourt de structure monomodale, c'est-à-dire dont les globules gras ont des diamètres distribués autour d'une valeur moyenne prépondérante. Avantageusement, si la distribution des diamètres des globules gras est représentée sur un graphique représentant le volume occupé par les particules, exprimé en pourcentage par rapport au volume total, en fonction du logarithme népérien du diamètre des globules gras, on observe une répartition, du type gaussienne, autour d'une valeur moyenne (voir figure 2). En conclusion, on observe une homogénéité des phases protéiques et lipidiques (voir figure 4).

D'une manière surprenante, la Demanderesse a mis au point un yoghourt de structure bimodale, dont l'acidité perçue en bouche est considérablement réduite.

De la même manière, la Demanderesse a découvert un procédé original de fabrication d'un yoghourt de structure bimodale.

D'une manière tout à fait surprenante, la Demanderesse a découvert que le yoghourt présentant une structure bimodale est perçu en bouche comme étant moins acide qu'un produit issu de la fermentation d'un mix unique. Ledit yoghourt peut ainsi être associé avec une préparation contenant un arôme chaud, notamment une préparation de chocolat ou une préparation vanillée avec des copeaux de chocolat. Les produits ainsi obtenus sont appréciés et bien notés par les consommateurs.

Au sens de la présente invention, on entend par yoghourt un produit laitier coagulé obtenu par fermentation lactique grâce à l'action de microorganismes thermophiles, issus de cultures de Streptococcus thermophilus et Lactobacillus delbruekii bulgaricus, à partir de lait et de produits laitiers. C'est la présence de ces deux souches bactériennes qui caractérise l'appellation yoghourt. Ces microorganismes spécifiques doivent être viables, en une quantité d'au moins $10^7$ U.F.C./g à la date de limite de consommation, les abréviations U.F.C signifiant Unité Formant Colonie. La fermentation lactique entraîne une réduction du pH et une coagulation.

Les produits laitiers sont choisis dans le groupe constitué de lait pasteurisé, de lait concentré, de lait partiellement écrémé pasteurisé, de lait partiellement écrémé concentré, de lait écrémé pasteurisé, de lait écrémé concentré, de crème pasteurisée, de crème légère pasteurisée, et de leurs mélanges.

Le yoghourt selon l'invention peut, en outre, être éventuellement additionné de matières premières laitières ou d'autres ingrédients tels que du sucre ou des matières sucrantes, un ou des arôme(s), des fruits, des céréales, ou des substances nutritionnelles, notamment des vitamines, des minéraux et des fibres. Les matières premières laitières sont choisies dans le groupe constitué de lait en poudre, de lait écrémé en poudre, de babeurre non fermenté, de babeurre liquide partiellement ou totalement déshydraté, de lactosérum concentré, de lactosérum en poudre, des protéines lactosériques, des protéines lactosériques concentrées, des protéines laitières hydrosolubles, de préparations à base de protéines de lait contenant au minimum 34% de matière azotée totale, de la caséine alimentaire, des caséinates fabriqués à partir de produits pasteurisés. Par sucre ou matière sucrante, on entend, au sens de la présente invention, tout hydrate de carbone édulcorant.

Par extension, on peut aussi appeler yoghourt au sens de la présente invention des produits comprenant en outre des bactéries lactiques, autres que les microorganismes Streptococcus thermophilus et Lactobacillus delbruekii bulgaricus, et notamment des microorganismes issus de souches de Bifidobacterium et/ou de Lactobacillus acidophilus et/ou de Lactobacillus casei. Ces souches lactiques additionnelles sont destinées à conférer au produit fini diverses propriétés, telles que la propriété de favoriser l'équilibre de la flore. Dans le produit fini, les micro-organismes doivent être à l'état viable.

Un tel yoghourt répond ainsi aux spécifications des laits fermentés et des yoghourts de la norme AFNOR NF 04-600 et de la norme codex Stan A-11a-1975. La norme AFNOR NF 04-600 précise entre autres que le produit ne doit pas avoir été chauffé après fermentation. De plus, dans un yoghourt, les produits laitiers et les matières premières laitières doivent représenter 70% au minimum (m/m) du produit fini.

La présente invention a ainsi pour objet un yoghourt, caractérisé en ce qu'il présente une structure bimodale, c'est-à-dire dont les diamètres des globules gras sont distribués autour de deux valeurs prépondérantes.

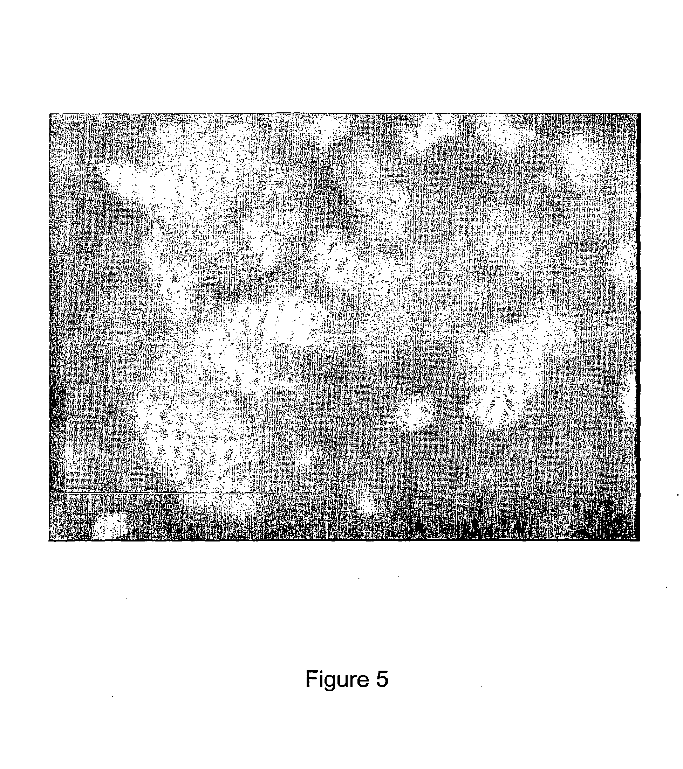

D'une manière tout à fait surprenante, on observe, dans le produit selon l'invention, d'une part, des globules gras connectés à un réseau mixte Matière Protéique - Matière Grasse, formé lors l'étape de fermentation, et, d'autre part, des agrégats de globules gras libres, c'est-à-dire non connectés au réseau Matière Protéique - Matière Grasse (voir figure 5).

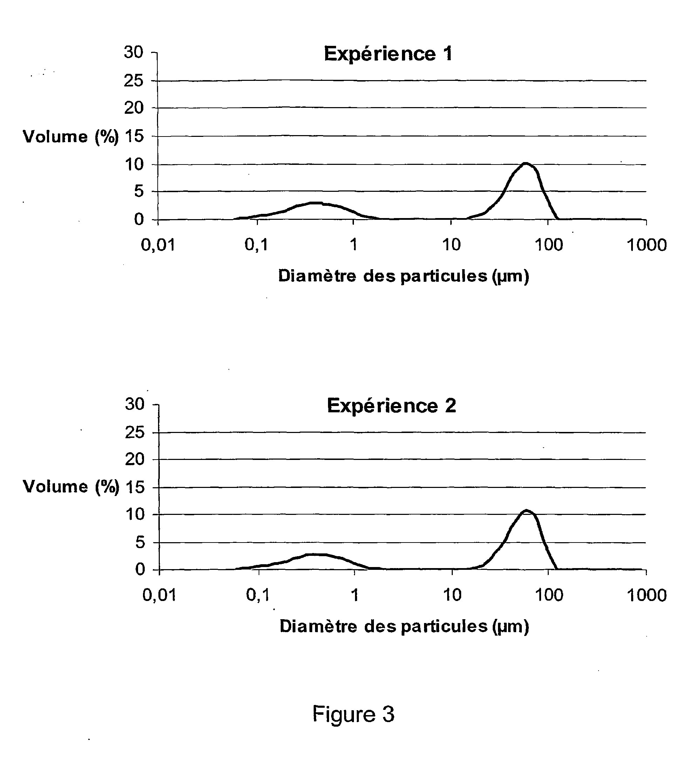

Ainsi le yoghourt selon l'invention est caractérisé par sa structure bimodale qui comprend, d'une part, des globules gras libres, présentant un diamètre de particules compris entre 0,05 et 3 $\mu$m, avantageusement entre 0,31 et 0,42 $\mu$m, encore plus avantageusement entre 0,33 et 0,39 $\mu$m, et, d'autre part, des globules gras connectés au réseau protéique, présentant un diamètre de particules compris entre 10 et 140 $\mu$m, avantageusement entre 41 et 76 $\mu$m, encore plus avantageusement entre 48 et 65 $\mu$m (voir figure 3).

En comparaison, un yoghourt de l'art antérieur possède une structure monomodale dans laquelle les globules gras sont connectés au réseau protéique et ont un diamètre de particules compris entre 10 et 140 $\mu$m, avantageusement entre 41 et 76 $\mu$m, encore plus avantageusement entre 48 et 65 $\mu$m.

Le diamètre de Sauter du yoghourt selon l'invention est caractéristiquement deux à quatre fois supérieur à celui d'une crème homogénéisée, utilisée dans le procédé selon l'invention, et au moins vingt fois inférieur à celui d'un yoghourt de structure monomodale, avantageusement à celui du yoghourt de structure monomodale utilisé dans le procédé selon l'invention. Encore plus avantageusement, le diamètre de Sauter du yoghourt selon l'invention est caractéristiquement au moins quarante fois inférieur à celui du yoghourt de structure monomodale, utilisé dans le procédé selon l'invention.

La valeur $D_{(V,0,9)}$ du yoghourt selon l'invention est caractéristiquement au moins quarante fois, avantageusement au moins soixante fois, encore plus avantageusement au moins soixante dix fois, supérieure à celle d'une crème homogénéisée, utilisée dans le procédé selon l'invention. La valeur $D_{(V,0,9)}$ du yoghourt selon l'invention vaut caractéristiquement 0,9 à 1 fois celle du yoghourt de structure monomodale, utilisé dans le procédé selon l'invention.

Dans un mode de réalisation particulier de l'invention, le yoghourt selon l'invention est caractérisé par un diamètre de Sauter D(3,2) compris entre 0,70 $\mu$m et 1,00 $\mu$m, avantageusement entre 0,78 $\mu$m et 0,90 $\mu$m et une valeur $D_{(V,0,9)}$ comprise entre 70,00 $\mu$m et 80,00 $\mu$m, avantageusement entre 74,00 $\mu$m et 75 $\mu$m.

En comparaison, un yoghourt de l'art antérieur, de structure monomodale, est caractérisé par un diamètre de Sauter D(3,2) compris entre 45,00 $\mu$m et 46,00 $\mu$m et une valeur $D_{(V,0,9)}$ comprise entre 75,00 $\mu$m et 76,50 $\mu$m.

Le diamètre de Sauter D(3,2) est le diamètre moyen pondéré des globules gras en surface. Il est défini comme la moyenne du rapport entre le diamètre équivalent volume $d_v$, et le diamètre équivalent surface, $d_s$ :

$$\cdot D(3,2) = \sum d_v{}^3 / \sum d_s{}^2$$

Le diamètre équivalent est le diamètre qu'aurait la particule si elle était sphérique, ainsi $d_v$ est le diamètre équivalent volume et $d_s$ le diamètre équivalent surface.
Ainsi

$$d_v \equiv (6V_p/\pi)^{\frac{1}{3}}$$

$$d_s \equiv (A_p/\pi)^{\frac{1}{2}}$$

avec $V_p$ le volume de la particule et $A_p$ la surface de la particule.

La valeur $D_{(V,0,9)}$ représente la valeur de taille des particules pour laquelle la distribution des particules est telle qu'exactement 90% des particules de l'échantillon (v/v) présentent une taille inférieure ou égale.

Dans un mode de réalisation particulier de l'invention, un diamètre de Sauter D(3,2) compris entre 0,78 $\mu$m et 0,90 $\mu$m et une valeur $D_{(V,0,9)}$ comprise entre 74,00 $\mu$m et 75,00 $\mu$m sont des caractéristiques avantageuses du yoghourt selon l'invention.

Un diamètre de Sauter D(3,2) au moins trois fois supérieur à celui d'une crème homogénéisée, utilisée dans le procédé selon l'invention, et au moins quarante fois inférieur à celui du yoghourt de structure monomodale, utilisé dans le procédé selon l'invention, est une caractéristique avantageuse du yoghourt selon l'invention.

Une valeur $D_{(V,0,9)}$ au moins soixante fois supérieure à celle d'une crème homogénéisée, utilisée dans le procédé selon l'invention, et 0,95 à 1 fois égale à celle du yoghourt de structure monomodale, utilisé dans le procédé selon l'invention, est une caractéristique avantageuse du yoghourt selon l'invention.

Les valeurs de diamètre des globules gras sont préférentiellement déterminées à l'aide d'une méthode de granulométrie laser. Dans la méthode de granulométrie, un appareil, le MASTERSIZER S (MSS) (Malvern), source laser à Hélium-Néon avec une lentille focale de 300 mm, est avantageusement utilisé. Les échantillons mesurés sont préalablement homogénéisés et ensuite dilués dans du sodium dodécyl sulfate, SDS, de 1%. En s'adsorbant sur les parties hydrophobes des micelles de caséine et des protéines sériques, le SDS provoque leur désagglomération par répulsion électrostatique. L'ajout de SDS permet d'éviter l'agglomération des protéines, en particulier de celles qui stabilisent la matière grasse. Il donne une image précise de la taille des gouttelettes de gras, en s'affranchissant de leur agglomération. Cette technique permet d'évaluer le diamètre de Sauter D(3,2) des particules et de calculer la valeur $D_{(V,0,9)}$.

Avantageusement, le yoghourt est caractérisé en ce qu'il est perçu, en bouche, par les consommateurs comme étant moins acide qu'un yoghourt classique, de structure monomodale.

Le profil sensoriel sert à créer une carte d'identité organoleptique du produit selon l'invention. C'est la description d'un produit, avec un ensemble de descripteurs standardisés, par un groupe de personnes formées à quantifier ces descripteurs sur une échelle d'évaluation. Ce groupe de personnes formées constitue le jury sensoriel. Le jury sensoriel est composé de personnes recrutées à l'aide de tests de recrutement basés sur les aptitudes sensorielles, l'expression verbale, le comportement. Il est entraîné durant 6 mois à décrire des produits avec un langage standardisé et à utiliser une échelle de notation. A la fin de la formation il doit atteindre une certaine performance, il doit être répétable et discriminant et les juges doivent être en consensus. Les tests qu'il va réaliser seront d'abord "monatic séquentiels", c'est-à-dire qu'aucune comparaison n'est faite, puis comparatifs, entre un yoghourt de même composition de structure monomodale et un yoghourt selon l'invention. Le jury sensoriel est composé de 15 personnes, qui goûtent deux fois le même produit suivant un plan d'expériences déterminé, chacun ne goûtera pas le même produit en premier. Chaque personne du jury reportera ces choix sur un ordinateur. Les données seront traitées statistiquement, au moyen d'un test Anova.

Tout étant égal par ailleurs, à savoir la teneur en protéines, la teneur en matière grasse, la teneur en glucides, le pH et l'acidité Dornic, le yoghourt selon l'invention est perçu en bouche comme étant moins acide qu'un yoghourt classique.

On suppose que la différence de perception organoleptique du yoghourt selon l'invention est due à la présence de globules gras libres de très faible diamètre, compris entre 0,05 et 3 $\mu$m, qui doivent avoir un effet masquant en bouche de l'acidité du yoghourt. Les globules gras libres doivent avoir un effet tapissant en bouche et il se peut qu'ils masquent ainsi l'acidité du yoghourt selon l'invention. On suppose que lesdits globules gras libres, de petite taille, viennent ainsi réduire mécaniquement la perception de l'acidité, du produit selon l'invention, par les récepteurs sensoriels. En conclusion, cette perception organoleptique très différente est vraisemblablement due au profil granulométrique du produit, différent de celui d'un yoghourt classique.

Selon une variante avantageuse de l'invention, on incorpore dans ledit yoghourt une préparation aromatisée. Avantageusement, cette préparation aromatisée est une préparation de chocolat ou une préparation vanillée avec des copeaux de chocolat.

Au sens de la présente invention, on entend par préparation aromatisée toute préparation pouvant être utilisée classiquement pour parfumer un yoghourt ou un produit dérivé des produits laitiers. Ladite préparation peut donc notamment contenir un ou des arôme(s), dont des arômes chauds, des fruits, notamment des fruits frais et/ou en conserve et/ou surgelés et/ou en poudre et/ou de la purée de fruits et/ou de la pulpe de fruits et/ou du sirop de fruit et/ou du jus de fruits, des céréales, ou des substances nutritionnelles, notamment des vitamines, des minéraux et des fibres.

Comme exemples d'arômes chaud, on peut notamment citer le chocolat, le cacao, le caramel, la vanille, le café, le praliné, le nougat, le miel, des arômes de fruits oléagineux, tels que notamment la noix, la noisette, l'amande, la pistache, et des arômes d'épices tels que notamment la cannelle, le coriandre, le curry.

Le profil granulométrique original du yoghourt selon l'invention modifie la perception organoleptique de ce dernier, qui est alors perçu comme étant moins acide. L'incorporation d'un arôme dit chaud dans un tel yoghourt permet d'obtenir un yoghourt savoureux, dans lequel on ne perçoit pas l'amertume et les faux goûts que présentent habituellement les arômes chauds, notamment le chocolat et le cacao, en milieu acide.

Le yoghourt selon l'invention peut en outre comprendre des additifs alimentaires. L'utilisation de ces additifs devra être en conformité avec la réglementation en vigueur. Ces additifs peuvent être des édulcorants et/ou des aromatisants et/ou des colorants et/ou des agents de conservation classiquement utilisés par l'homme du métier dans le cadre de la fabrication de produits alimentaires, et notamment dans le cadre de la production de yoghourts. Cette liste n'étant pas limitative, d'autres additifs alimentaires peuvent être utilisés et cela sous deux conditions: ils ne devront pas être mis directement dans les composés lactés et ils ne seront apportés que par des ingrédients ajoutés.

La présente invention a aussi pour objet un procédé de préparation d'un yoghourt tel que décrit précédemment, caractérisé en ce qu'il comprend les étapes suivantes :

    a) fabrication d'un yoghourt selon un procédé classique de l'art ;
    b) fabrication d'une crème homogénéisée ;
    c) mélange de la masse yoghourt avec la crème homogénéisée ;
    d) obtention d'un yoghourt de structure bimodale.

Avantageusement, l'étape a) de fabrication d'un yoghourt comprend au moins une étape de fermentation lactique. Avantageusement, l'étape a) de fabrication d'un yoghourt comprend au moins une étape de brassage.

Avantageusement, la crème homogénéisée ajoutée lors de l'étape c) est sucrée.

Les proportions de crème homogénéisée à ajouter dépendent de la nature et de la teneur en matière grasse de la crème utilisée dans le procédé de fabrication ainsi que de la nature et de la teneur en matière grasse de la masse yoghourt utilisée dans le procédé de fabrication. L'homme du métier, à la lumière de ses connaissances dites classiques, est parfaitement capable de déterminer les quantités minimales de crème homogénéisée à ajouter, pour modifier la perception organoleptique du produit final, et les quantités maximales de crème homogénéisée à ajouter, pour conserver l'appellation yoghourt.

Les proportions de crème ajoutée dans la masse yoghourt sont comprises entre 7 et 14 % (m/m) de crème homogénéisée, par rapport au poids total du produit fini, et avantageusement entre 9 et 12% (m/m) de crème homogénéisée, par rapport au poids total du produit fini. Le produit final comprenant au minimum 70% (m/m) de produits laitiers et de matières premières laitières, pour pouvoir notamment bénéficier de l'appellation yoghourt, la quantité, en poids, de masse yoghourt dans le produit fini est d'au moins 56% (m/m) par rapport au poids total du produit fini.

Au sens de la présente invention, on entend par crème homogénéisée une crème, issue du lait, prépasteurisée, qui a été soumise à un traitement thermique et à une homogénéisation. Avantageusement cette crème peut être sucrée.

La crème peut être sucrée au moyen de toute matière sucrante, à savoir tout hydrate de carbone édulcorant, classiquement utilisée par l'homme du métier. Comme exemple de matière sucrante, on peut notamment citer le sucre de betterave ou sucre blanc, le sucre de canne ou sucre roux et les édulcorants tels que l'aspartame, la saccharine, le cyclamate, l'acésulfame K et la thaumatine.

L'homogénéisation est un procédé bien connu de l'homme du métier, qui permet de produire des globules gras dont les diamètres présentent, dans un spectre étroit, une moyenne faible, de l'ordre de 0,1 à 1,0 $\mu$m, et un écart type faible.

L'opération d'homogénéisation se fait à une température supérieure à 60°C dans un homogénéisateur, appareil permettant de projeter le lait sous une très forte pression, de l'ordre de 150 à 350 kg/cm$^2$, dans une tubulure à l'extrémité de laquelle s'applique un clapet conique en agate ou en acier notamment. La crème, en se frayant un passage entre ce dernier et son siège, se trouve laminée et la structure physicochimique de la membrane globulaire se trouve modifiée. L'homogénéisation est à simple ou double étape.

La masse yoghourt est produite selon une méthode connue de l'art. A titre illustratif, l'étape a) de fabrication d'un yoghourt, selon un procédé classique de l'art, comprend les étapes suivantes :

> i) mixage du lait prépasteurisé ou concentré et standardisé;
> ii) traitement thermique puis homogénéisation du mix obtenu suite à l'étape i) ;
> iii) refroidissement du mix à la température de fermentation puis ensemencement du mix avec les ferments lactiques thermophiles spécifiques Lactobacillus Bulgaricus et Streptococcus Thermophilus ;
> iv) refroidissement à une température comprise entre 15 et 25°C ;
> v) stockage.

Selon un mode avantageux de l'invention, le lait prépasteurisé ou concentré et standardisé est mixé, lors de l'étape i), avec un mélange de protéines, avantageusement des caséinates et des protéines sériques, et éventuellement avec une matière sucrante. Avantageusement, le mélange de protéines et la matière sucrante se présentent sous forme de poudres. La prépasteurisation correspond, au sens de la présente invention, à un traitement thermique du lait cru qui vise à détruire les germes pathogènes et à réduire la flore totale. Selon un procédé classique, la prépasteurisation est effectuée à une température comprise entre 70 et 80°C, avantageusement à une température d'environ 72°C, pendant environ 30 secondes.

La standardisation de la matière grasse et des matières protéiques du lait correspond à une élaboration du mix laitier en assemblant les matière premières laitières pour obtenir une teneur précise en protéines et en matière grasse.

D'une manière classique, le traitement thermique, lors de l'étape ii), a lieu à une température comprise entre 80 et 100°C.

Eventuellement, l'étape iii) de fermentation comprend en outre l'addition d'autres bactéries lactiques, telles que des souches de Bifidobacterium et/ou de Lactobacillus acidophilus et/ou de Lactobacillus casei.

La température de fermentation est avantageusement comprise entre 30 et 50°C, plus avantageusement entre 35 et 45°C, et encore plus avantageusement entre 37 et 41°C. Le produit mis à fermenter est refroidi, dès qu'il a atteint l'acidité désirée, à une température comprise entre 15 et 25°C, avantageusement à une température comprise entre 18 et 22°C. Avantageusement, l'acidité visée correspond à des valeurs de pH comprises entre 4 et 5, plus avantageusement entre 4,2 et 4,8.

Le yoghourt ainsi obtenu est ensuite stocké dans un tank de stockage, avantageusement à une température comprise entre 15 et 25°C, encore plus avantageusement à une température comprise entre 18 et 22°C.

La crème homogénéisée est produite selon une méthode connue de l'art. A titre illustratif, l'étape b) de fabrication d'une crème sucrée homogénéisée, selon un procédé classique de l'art, comprend les étapes suivantes :

> i) mixage d'une crème prépasteurisée ;
> ii) traitement thermique puis homogénéisation ;
> iii) stérilisation ;
> iv) refroidissement puis stockage.

Avantageusement, lors de l'étape i), on incorpore, à la crème prépasteurisée, une matière sucrante. Au sens de la présente invention, on entend par matière sucrante toute matière habituellement utilisée par l'homme du métier pour donner un goût sucré à des produits alimentaires. Comme exemples de matières sucrantes, on peut notamment citer le sucre de betterave ou sucre blanc, le sucre de canne ou sucre roux, les édulcorants tels que l'aspartame, la saccharine, le cyclamate, l'acésulfame K et la thaumatine.

L'étape d'homogénéisation permet de produire des globules gras dont les diamètres présentent une moyenne faible, de l'ordre de 0,1 à 1,0 $\mu$m, et un écart type faible, soit un spectre étroit.

La stérilisation est avantageusement effectuée à une température supérieure à 100°C pendant un temps assez court. Avantageusement, le temps de stérilisation est compris entre 10 et 30 secondes.

La crème est ensuite refroidie à une température avantageusement comprise entre 5 et 15°C, plus avantageusement à une température comprise entre 6 et 10°C.

La crème ainsi obtenue est ensuite stockée dans un tank de stockage, avantageusement à une température comprise entre 5 et 15°C, encore plus avantageusement à une température comprise entre 6 et 10°C.

Selon une variante avantageuse de l'invention, l'étape c) de mélange comprend tout d'abord une étape d'incorporation en ligne ou en cuve (en batch) de la crème sucrée homogénéisée dans la masse yoghourt puis une étape de mélange de la crème sucrée homogénéisée et de la masse yoghourt, en ligne dans un mélangeur statique ou dynamique, ou en cuve. Avantageusement, l'étape de mélange de la crème sucrée homogénéisée et de la masse yoghourt a lieu dans un mélangeur statique.

Selon une autre variante avantageuse de l'invention, le procédé de préparation comprend en outre une étape e) d'incorporation d'une préparation aromatisée dans le yoghourt de structure bimodale.

Les proportions de préparation aromatisée à ajouter dépendent de la nature de la préparation aromatisée utilisée, notamment de sa concentration en arôme et de l'arôme utilisé, ainsi que de la nature, particulièrement du goût, du produit final visé. L'homme du métier, à la lumière de ses connaissances dites classiques, est parfaitement capable de déterminer les quantités minimales et maximales de préparation aromatisée à ajouter.

Dans un mode de réalisation avantageux de l'invention, les proportions de préparation aromatisée ajoutée dans le yoghourt de structure bimodale sont comprises entre 10 et 18 % (m/m) et avantageusement entre 12 et 16% (m/m), de préparation aromatisée par rapport à la quantité totale de produit fini.

Au sens de la présente invention, on entend par préparation aromatisée toute préparation pouvant être utilisée classiquement pour parfumer un yoghourt ou un produit dérivé des produits laitiers. Ladite préparation peut donc notamment contenir un ou des arôme(s), dont des arômes chauds, des fruits, des céréales, ou des substances nutritionnelles, notamment des vitamines, des minéraux et des fibres. Comme exemples d'arômes chaud, on peut notamment citer le chocolat, le cacao, le caramel, la vanille, le café, le praliné, le nougat, le miel, des arômes de fruits oléagineux, tels que notamment la noix, la noisette, l'amande, la pistache, et des arômes d'épices tels que notamment la cannelle, le coriandre, le curry.

Avantageusement, dans le procédé de préparation selon la présente invention, la préparation aromatisée est incorporée en ligne ou en cuve (en batch) dans le yoghourt de structure bimodale puis mélangée en cuve ou en ligne au moyen d'un mélangeur statique ou dynamique, encore plus avantageusement au moyen d'un mélangeur dynamique.

D'une manière particulièrement avantageuse, la préparation aromatisée incorporée est une préparation de chocolat ou une préparation vanillée avec des copeaux de chocolat.

Selon une autre variante avantageuse de l'invention, le procédé de préparation comprend en outre une étape f) de conditionnement puis de refroidissement et enfin de stockage.

Avantageusement, le yoghourt selon l'invention est refroidi après conditionnement à une température comprise entre 2 et 6°C.

Le yoghourt selon l'invention ainsi obtenu peut également être stocké dans un tank de stockage, avantageusement à une température comprise entre 5 et 22°C, avant d'être conditionné puis refroidi à une température comprise entre 2 et 6°C.

La présente invention a également pour objet un yoghourt susceptible d'être obtenu par le procédé tel que décrit précédemment, caractérisé en ce qu'il présente une structure bimodale.

Description des figures :

La figure 1 illustre la répartition granulométrique des globules gras dans une crème sucrée homogénéisée (expériences 1 et 2). On observe une distribution monomodale.

La figure 2 illustre la répartition granulométrique des globules gras dans un yoghourt classique (expériences 1 et 2). On observe une distribution monomodale.

La figure 3 illustre la répartition granulométrique des globules gras dans un yoghourt selon l'invention (expériences 1 et 2). On observe une distribution bimodale.

La figure 4 représente une observation microscopique d'un yoghourt de structure monomodale, obtenu par un procédé classique, à 6% de matière grasse.

La figure 5 représente une observation microscopique d'un yoghourt obtenu par le procédé de l'invention, à partir d'une masse yoghourt à 3,7% de matière grasse et d'une crème sucrée homogénéisée à 20% de matière grasse.

Les exemples suivants illustrent l'invention sans toutefois en limiter la portée.

**Exemple 1 : Formule d'un yoghourt au chocolat selon l'invention**

Formule d'un yoghourt au chocolat selon l'invention :

| | |
|---|---|
| Masse yoghourt | 75,5% m/m |
| Crème sucrée homogénéisée | 10,5 % m/m |
| Préparation au chocolat | 14% m/m |

La masse yoghourt est composée de 3,7% m/m de matière grasse, a un taux de protéines total de 4,23% m/m et comprend 7,2% m/m de saccharose, mélangée à de la crème sucrée homogénéisée composée de 20% m/m de matière grasse et de 15% m/m de saccharose.

Ce produit fini est composé de 6,4% m/m de matière grasse, de 3,6%m/m au total de protéines et de 15,5 % m/m de glucides, dont 7% m/m de saccharose.

La somme des ingrédients non-laitiers et laitiers non-fermentés dans le produit fini est inférieure à 30 % en masse. Ce produit respecte donc les contraintes légales de l'appellation yoghourt.

## Exemple 2 : Procédé de préparation d'un yoghourt au chocolat selon l'invention

a) fabrication de la masse yoghourt :

Une préparation à base de lait et de produits laitiers est préchauffée à 81°C, dégazée puis chauffée à 89°C. Elle est ensuite homogénéisée à chaud et sous une pression de 250 bars. En sortie de l'homogénéisateur, la préparation doit être à une température de 95°C. Suite à l'étape d'homogénéisation, la préparation est pasteurisée pendant 8 minutes à 95°C puis chambrée. La préparation est ensuite refroidie à une température de 4°C.

Par la suite, la préparation est ensemencée avec des ferments lactiques thermophiles, au moins avec les ferments lactiques issus des souches Streptococcus thermophilus et Lactobacillus delbruekii bulgaricus, et chauffée jusqu'à 39°C. La préparation est laissée fermenter. Lorsque la masse yoghourt a suffisamment fermenté, c'est-à-dire lorsqu'elle a atteint une acidité correspondant à une valeur de pH d'environ 4,65, elle est lissée sur un filtre de 0,5 mm puis refroidie à une température de 20°C.

En fonction des caractéristiques du produit final désirées, l'homme du métier connaît les paramètres du procédé qu'il doit modifier.

b) fabrication de la crème homogénéisée :

Du lait écrémé est sucré et mélangé avec une crème à 400 g/l de matière grasse. Cette préparation est filtrée sur filtre à 0,5 mm. Elle est ensuite préchauffée à 95°C, puis chambrée pendant 6 minutes avant d'être homogénéisée sous une pression totale de 205 bars. Suite à l'étape d'homogénéisation, la préparation est pasteurisée à une température de 118°C puis refroidie à 6°C.

En fonction des caractéristiques du produit final désirées, l'homme du métier connaît les paramètres du procédé qu'il doit modifier.

c) mélange de la masse yoghourt avec la crème homogénéisée sucrée et incorporation de la préparation au chocolat :

On incorpore, dans un mélangeur statique, 10,5% de crème homogénéisée sucrée dans 75,5% de masse yoghourt. On incorpore ensuite, dans un mélangeur dynamique, 14% en masse d'une préparation vanillée avec des copeaux de chocolat. Les pourcentages sont exprimés en masse par rapport à la masse totale du produit fini.

Le yoghourt est conditionné et stocké en chambre froide.

## Exemple 3 : Mesure de la distribution granulométrique des globules gras :

a) Produits testés :

On a mesuré la distribution granulométrique des globules gras dans les produits suivants :

- une crème sucrée homogénéisée ;
- un yoghourt obtenu par le procédé classique (yoghourt classique) ;
- un yoghourt obtenu par le procédé d'invention dans lequel de la matière grasse a été ajoutée après l'étape de fermentation.

b) Méthode de mesure:

Afin de déterminer la structure des produits, des méthodes de granulométrie laser ont été utilisées. Dans la méthode de granulométrie, un appareil, le MASTERSIZER S (MSS) (Malvern), source laser à Hélium-Néon avec une lentille focale de 300 mm, a été utilisé. Les échantillons mesurés ont été préalablement homogénéisés et ensuite dilués dans du SDS à 1%. En s'adsorbant sur les parties hydrophobes des micelles de caséine et des protéines sériques, le SDS provoque leur désagglomération par répulsion électrostatique. L'ajout de SDS permet d'éviter l'agglomération des protéines, en particulier de celles qui stabilisent la matière grasse. Il donne une image précise de la taille des gouttelettes de gras, en s'affranchissant de leur agglomération. Cette technique permet d'évaluer le diamètre de Sauter D(3,2) des particules et de calculer la valeur $D_{(V,0,9)}$. Le protocole de mesure de la méthode granulométrie est le suivant:

1. Mise en marche du laser 30 minutes au minimum avant de faire une mesure (temps de chauffage de l'appareil)
2. Configuration du matériel:

- lentille focale de 300 mm ;

- analyse de polydispersité ;
- indice de réfraction: eau 1,33; matière grasse 1,46 ;
- alignement du laser ;
- mesure du bruit de fond.

3. Préparation de l'échantillon (dilution en présence de SDS à 1%)

4. Placement de l'échantillon dans la cellule de mesure pour obtenir un niveau de turbidité de 15% à 30%

5. Lancement de la mesure :

- évaluation de la distribution en taille des globules gras ;
- calcul du diamètre de Sauter D(3,2) et de D(v,0,9).

6. Nettoyage à l'eau distillée entre chaque mesure

Pour s'assurer de la reproductibilité des mesures et pour s'affranchir des incertitudes liées à la manipulation, on réalise deux mesures par échantillon.

c) <u>Résultats:</u>

Les valeurs obtenues pour les principaux paramètres sont résumées dans le tableau 1 suivant :

<div align="center">Tableau 1 :</div>

| | D(3,2) en $\mu$m | | D(v, 0,9) en $\mu$m | |
|---|---|---|---|---|
| Crème sucrée homogénéisée | Expérience 1 | Expérience 2 | Expérience 1 | Expérience 2 |
| | 0,35 | 0,35 | 1,04 | 1,04 |
| Yoghourt classique | 45,65 | 45,38 | 76,14 | 75,55 |
| Yoghourt selon l'invention | 0,83 | 0,87 | 74,64 | 74,22 |

D(3,2) correspond au diamètre de Sauter qui illustre la taille moyenne des globules gras. La valeur $D_{(V,0,9)}$ représente la valeur de taille des particules pour laquelle on observe une distribution de particules telle qu'exactement 90% des particules de l'échantillon (v/v) présentent une taille inférieure ou égale.

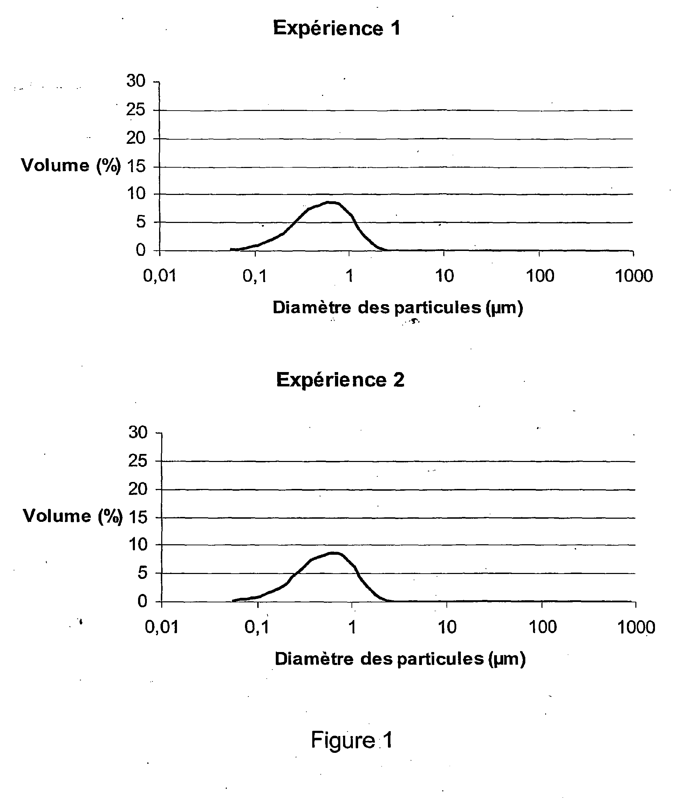

La figure 1 illustre la répartition granulométrique des globules gras dans la crème sucrée homogénéisée (expériences 1 et 2). On observe une distribution monomodale et un diamètre des particules de globules gras compris entre 0,05 $\mu$m et 2,28 $\mu$m.

La figure 2 illustre la répartition granulométrique des globules gras dans le yoghourt classique (expériences 1 et 2). On observe une distribution monomodale et un diamètre des particules de globules gras compris entre 12,21 $\mu$m et 120,67 $\mu$m.

La figure 3 illustre la répartition granulométrique des globules gras dans le yoghourt selon l'invention (expériences 1 et 2). On observe une distribution bimodale et un diamètre des particules de globules gras compris entre 0,05 $\mu$m et 2,65 $\mu$m d'une part et entre 14,22 $\mu$m et 120,67 $\mu$m d'autre part.

d) <u>Conclusions :</u>

Le yoghourt selon l'invention présente une structure bimodale, due à la présence de globules gras de petite taille libres et à la présence de globules gras, de taille plus importante, connectés au réseau protéique.

**Exemple 4 : Observation au microscope optique :**

a) <u>Produits testés :</u>

On a mesuré la distribution granulométrique des globules gras dans les deux produits suivants :

- un yoghourt obtenu par un procédé classique à 6% de matière grasse, soit un yoghourt classique de structure monomodale ;
- un yoghourt obtenu par le procédé de l'invention, à partir d'une masse yoghourt à 3,7% de matière grasse et d'une crème sucrée homogénéisée à 20% de matière grasse.

b) <u>Méthode de mesure :</u>

La méthode de microscopie optique est basée sur le principe de fluorescence, et cet outil nous permet d'observer la structure en terme de taille et distribution des agrégats. La matière grasse est colorée par le marqueur colorant Nile Blue. Cet outil nous permet d'observer la structure, en terme de taille et de distribution, des agrégats protéiques dans lesquels est incluse la phase grasse et des pores contenant la phase soluble, dont les protéines solubles.
On observe, au microscope, un yoghourt de structure monomodale, obtenu par un procédé classique, à 6% de matière grasse (figure 4) et un yoghourt obtenu par le procédé de l'invention, à partir d'une masse yoghourt à 3,7% de matière grasse et d'une crème sucrée homogénéisée à 20% de matière grasse (figure 5).

c) <u>Conclusions :</u>

Pour les échantillons correspondants au yoghourt de structure monomodale, on remarque une homogénéité des phases protéiques et lipidiques. Les globules gras, obtenus après homogénéisation, de faible taille et de taille homogène, sont bien connectés au réseau protéique lors de l'étape de fermentation, aboutissant à la formation d'un réseau mixte dense, avec une imbrication importante des globules gras dans le réseau protéique.
La structure des échantillons correspondants au yoghourt selon l'invention peut être considérée comme très différente dans la mesure où les agrégats, à dominante matière grasse, sont clairement présents avec la présence simultanée d'un réseau protéique relativement dense. De plus, on observe nettement la présence de particules isolées, non connectées au réseau protéique.
Ces observations mettent donc bien en évidence une différence entre la structure des échantillons.

**Revendications**

1.    Yoghourt, **caractérisé en ce qu'**il présente une structure bimodale qui comprend des globules gras connectés au réseau mixte Matière Protéique - Matière Grasse et des globules gras libres et **en ce qu'**il comprend 7 à 14 % (m/m) d'une crème homogénéisée.

2.    Yoghourt selon la revendication 1, **caractérisé en ce que** la structure bimodale comprend des globules gras libres non connectés au réseau mixte Matière Protéique - Matière Grasse, de diamètre de particules compris entre 0,05 et 3 $\mu$m, et des globules gras connectés au réseau mixte Matière Protéique - Matière Grasse, de diamètre de particules compris entre 10 et 140 $\mu$m.

3.    Yoghourt selon la revendication 1 ou 2, **caractérisé en ce qu'**il comprend une préparation aromatisée.

4.    Yoghourt selon la revendication 3, **caractérisé en ce que** la préparation aromatisée est une préparation de chocolat.

5.    Yoghourt selon la revendication 4, **caractérisé en ce que** la préparation aromatisée est une préparation vanillée avec des copeaux de chocolat.

6.    Procédé de préparation d'un yoghourt selon l'une quelconque des revendications précédentes à partir d'une masse yoghourt et d'une crème homogénéisée, **caractérisé en ce qu'**il comprend une étape de mélange d'au moins 56% en poids de masse yoghourt avec 7 à 14% en poids de crème homogénéisée, par rapport au poids total du produit fini.

7.    Procédé de préparation selon la revendication 6, **caractérisé en ce que** la masse yoghourt est brassée.

8.    Procédé de préparation selon la revendication 6, **caractérisé en ce que** dans l'étape de mélange la crème homogénéisée est incorporée en ligne ou en cuve dans la masse yoghourt puis mélangée avec la masse yoghourt en cuve ou en ligne dans un mélangeur statique ou dynamique.

9.    Procédé de préparation selon l'une quelconque des revendications 6 à 8, **caractérisé en ce qu'**il comprend en outre une étape d'incorporation d'une préparation aromatisée dans le yoghourt de structure bimodale, après l'étape de mélange.

10.   Procédé de préparation selon la revendication 9, **caractérisé en ce que** la préparation aromatisée est incorporée en ligne ou en cuve dans le yoghourt de structure bimodale puis mélangée en cuve ou en ligne au moyen d'un mélangeur statique ou dynamique.

11. Procédé de préparation selon la revendication 9 ou 10, **caractérisé en ce que** la préparation aromatisée incorporée est une préparation de chocolat ou une préparation vanillée avec des copeaux de chocolat.

12. Yoghourt susceptible d'être obtenu par le procédé selon l'une quelconque des revendications 6 à 11, **caractérisé en ce qu'**il présente une structure bimodale.

**Claims**

1. Yogurt, **characterized in that** it has a bimodal structure that comprises fat globules connected to the Protein-Fat mixed network and free fat globules, and **in that** it comprises 7% to 14% (m/m) of a homogenized cream.

2. Yogurt according to Claim 1, **characterized in that** the bimodal structure comprises free fat globules not connected to the Protein-Fat mixed network, with a particle diameter of between 0.05 and 3 $\mu$m, and fat globules connected to the Protein-Fat mixed network, with a particle diameter of between 10 and 140 $\mu$m.

3. Yogurt according to Claim 1 or 2, **characterized in that** it comprises a flavored preparation.

4. Yogurt according to Claim 3, **characterized in that** the flavored preparation is a chocolate-flavored preparation.

5. Yogurt according to Claim 4, **characterized in that** the flavored preparation is a vanilla-flavored preparation with chocolate chips.

6. Process for preparing a yogurt according to any one of the preceding claims from a yogurt bulk and a homogenized cream, **characterized in that** it includes a step of mixing at least 56% by weight of yogurt bulk with 7% to 14% by weight of homogenized cream, relative to the total weight of the finished product.

7. Preparation process according to Claim 6, **characterized in that** the yogurt bulk is blended.

8. Preparation process according to Claim 6, **characterized in that**, in the mixing step, the homogenized cream is incorporated in-line or in-tank into the yogurt bulk and then mixed with the yogurt bulk in-tank or in-line in a static or dynamic mixer.

9. Preparation process according to any one of Claims 6 to 8, **characterized in that** it also includes a step of incorporating a flavored preparation into the yogurt of bimodal structure, after the mixing step.

10. Preparation process according to Claim 9, **characterized in that** the flavored preparation is incorporated in-line or in-tank into the yogurt of bimodal structure and then mixed in-tank or in-line by means of a static or dynamic mixer.

11. Preparation process according to Claim 9 or 10, **characterized in that** the flavored preparation incorporated is a chocolate-flavored preparation or a vanilla-flavored preparation with chocolate chips.

12. Yogurt that may be obtained via the process according to any one of Claims 6 to 11, **characterized in that** it has a bimodal structure.

**Patentansprüche**

1. Joghurt, **dadurch gekennzeichnet, dass** er eine bimodale Struktur aufweist, welche Fettkügelchen, welche mit dem gemischten Netzwerk aus Proteinmaterial und Fetten verbunden sind, und freie Fettkügelchen umfasst und dass er 7 bis 14% (Gew./Gew.) eines homogenisierten Rahms umfasst.

2. Joghurt nach Anspruch 1, **dadurch gekennzeichnet, dass** die bimodale Struktur freie Fettkügelchen, welche mit dem gemischten Netzwerk aus Proteinmaterial und Fetten nicht verbunden sind, mit einem Teilchendurchmesser zwischen 0,05 und 3 $\mu$m eingeschlossen und Fettkügelchen, welche mit dem gemischten Netzwerk aus Proteinmaterial und Fetten verbunden sind, mit einem Teilchendurchmesser zwischen 10 und 140 μm eingeschlossen umfasst.

**3.** Joghurt nach Anspruch 1, **dadurch gekennzeichnet, dass** er eine aromatisierte Zubereitung umfasst.

**4.** Joghurt nach Anspruch 3, **dadurch gekennzeichnet, dass** die aromatisierte Zubereitung eine Schokoladezubereitung ist.

**5.** Joghurt nach Anspruch 4, **dadurch gekennzeichnet, dass** die aromatisierte Zubereitung eine mit Vanillegeschmack aromatisierte Zubereitung mit Schokoladenstückchen ist.

**6.** Verfahren zur Herstellung eines Joghurts nach einem der vorangegangenen Ansprüche ausgehend von einer Joghurtmasse und einem homogenisierten Rahm, **dadurch gekennzeichnet, dass** es einen Schritt eines Mischens von wenigstens 56 Gew.-% Joghurtmasse mit 7 bis 14 Gew.-% homogenisiertem Rahm bezogen auf das Gesamtgewicht des fertigen Erzeugnisses umfasst.

**7.** Herstellungsverfahren nach Anspruch 6, **dadurch gekennzeichnet, dass** die Joghurtmasse gerührt wird.

**8.** Herstellungsverfahren nach Anspruch 6, **dadurch gekennzeichnet, dass** bei dem Schritt eines Mischens der homogenisierte Rahm in einer Leitung oder in einem Behälter in die Joghurtmasse eingebracht wird, dann mit der Joghurtmasse in einem Behälter oder in einer Leitung in einem statischen oder dynamischen Mischer gemischt wird.

**9.** Herstellungsverfahren nach einem der Ansprüche 6 bis 8, **dadurch gekennzeichnet, dass** es außerdem einen Schritt eines Einbringens einer aromatisierten Zubereitung in den Joghurt mit bimodaler Struktur nach dem Schritt eines Mischens umfasst.

**10.** Herstellungsverfahren nach Anspruch 9, **dadurch gekennzeichnet, dass** die aromatisierte Zubereitung in einer Leitung oder in einem Behälter in den Joghurt mit bimodaler Struktur eingebracht wird, dann in einem Behälter oder in einer Leitung mittels eines statischen oder dynamischen Mischers eingemischt wird.

**11.** Herstellungsverfahren nach Anspruch 9 oder 10, **dadurch gekennzeichnet, dass** die aromatisierte Zubereitung, die eingebracht wird, eine Schokoladezubereitung oder eine mit Vanillegeschmack aromatisierte Zubereitung mit Schokoladenstückchen ist.

**12.** Joghurt, welcher durch das Verfahren nach einem der Ansprüche 6 bis 11 erhalten werden kann, **dadurch gekennzeichnet, dass** er eine bimodale Struktur aufweist.

## Expérience 1

Volume (%)

Diamètre des particules (μm)

## Expérience 2

Volume (%)

Diamètre des particules (μm)

## Figure 1

## Expérience 1

## Expérience 2

Figure 2

**Expérience 1**

Volume (%)

Diamètre des particules (µm)

**Expérience 2**

Volume (%)

Diamètre des particules (µm)

Figure 3

Figure 4

Figure 5